# EUROPÄISCHE PATENTSCHRIFT

(11) **EP 1 292 471 B1**
(45) Veröffentlichungstag und Bekanntmachung des Hinweises auf die Patenterteilung: **17.08.2005**
(21) Anmeldenummer: 01947192.9
(22) Anmeldetag: 07.06.2001
(51) Int. Cl.: B60R 21/32, B60R 21/01

(54) **ELEKTRISCHE FREIGABESCHALTUNG FÜR EIN INSASSENSCHUTZSYSTEM**
ELECTRICAL RELEASE CIRCUIT FOR A PASSENGER PROTECTION SYSTEM
CIRCUIT DE VALIDATION ELECTRIQUE D'UN SYSTEME DE PROTECTION DE PASSAGERS

(30) Priorität: 08.06.2000 DE 10028352
(43) Veröffentlichungstag der Anmeldung: 19.03.2003
(73) Patentinhaber: Siemens Aktiengesellschaft, 80333 München (DE)
(72) Erfinder: SWART, Marten, 93083 Obertraubling (DE)
(86) Internationale Anmeldenummer: PCT/DE2001/002137
(87) Internationale Veröffentlichungsnummer: WO 2001/094163

(56) Entgegenhaltungen:
- EP-A- 0 982 199
- WO-A-00/32445
- US-A- 6 036 225

## Beschreibung

Die Erfindung betrifft ein Verfahren zum Freigeben der Zündbarkeit von wenigstens zwei getrennt zündbaren Zündstufen in einem Insassenschutzsystem. Die Erfindung betrifft weiter eine elektrische Freigabeschaltung für ein Kraftfahrzeuginsassen-Schutzsystem mit wenigstens zwei Zündstufen gemäß dem Oberbegriff des Hauptanspruchs. Eine solche Freigabeschaltung ist aus US6036225A bekannt. Die Erfindung ist insbesondere für Kraftfahrzeug-Insassenschutzsysteme anwendbar.

In Kraftfahrzeug Insassenschutzsystemen kommen zunehmend Airbags zum Einsatz, die über zwei Gasgeneratoren verfügen, die jeweils mit einer eigenen Zündstufe ausgerüstet sind. Auf diese Weise kann das Aufblasen des Airbags besser an die jeweiligen Erfordernisse angepaßt werden. Wenn die zweite Aufblasstufe bei einem Unfall nicht für den Schutz der zu schützenden Personen benötigt wird oder ihre Zündung sogar eine Gefährdung darstellt, kann die zweite Stufe nicht unmittelbar nach der ersten Stufe gezündet werden. Damit aber Hilfs- oder Rettungspersonal nicht durch eine Zündung der zweiten Stufe gefährdet wird, ist es zweckmäßig, die zweite Stufe automatisch nach der ersten Stufe zu zünden, jedoch zu einem Zeitpunkt, zu dem die zu schützende Person dadurch nicht mehr gefährdet wird. Damit überhaupt eine Zündung einer Zündstufe möglich ist, muß ein Safing-Schalter geschlossen sein. Ein solcher Safing-Schalter schließt im Allgemeinen bereits bei Verzögerungen, die unterhalb eines Schwellwertes liegen, bei dem ein Aufblasen des Airbags notwendig ist. Wenn, wie in dem vorstehend geschilderten Fall, die Zündung der zweiten Zündstufe mit großer Verzögerung gegenüber der der ersten Zündstufe erfolgt, ist der Safing-Schalter wieder geöffnet, so dass keine Zündung der zweiten Stufe mehr möglich ist.

Der Erfindung liegt die Aufgabe zugrunde, Abhilfe für das vorgenannte Problem zu schaffen.

Der Anspruch 1 ist auf ein Verfahren zur Lösung der genannten Aufgabe gerichtet.

Der Anspruch 2 kennzeichnet den grundsätzlichen Aufbau einer elektrischen Freigabeschaltung zur Lösung der genannten Aufgabe.

Mit der erfindungsgemäß vorgesehenen Schalteinrichtung wird erreicht, dass, sobald der Safing-Schalter geschlossen wird und das Steuergerät das Ausgangssignal des Unfallsensors derart auswertet, dass zum Schutz einer Person nur eine Zündstufe gezündet werden muss, während einer Zeitdauer, die lang genug ist, um die zweite Zündstufe derart verzögert zu zünden, dass keine Gefährdung der Person mehr vorliegt, ein Signalzustand aufrechterhalten wird, der dem geschlossenen Safing-Schalter entspricht.

Das Steuergerät kann auf diese Weise niemals eigenständig ein Schließen des Safing-Schalters vortäuschen, sondern es besteht nur die Möglichkeit, den Signalzustand eines vorher geschlossenen Safing-Schalters während der vorbestimmten Zeitdauer aufrechtzuerhalten.

Die Unteransprüche sind auf vorteilhafte Ausführungsformen und Weiterbildungen der erfindungsgemäßen Freigabeschaltung gerichtet.

Die Erfindung kann überall dort mit Vorteil eingesetzt werden, wo Systeme, insbesondere Schutzsysteme, auf äußere Einflüsse hin mehrstufig ausgelöst werden und über einen Safing-Schalter abgesichert sind, der den Betrieb des Schutzsystems freigibt.

Die Erfindung wird im Folgenden anhand eines Blockschaltbildes eines die erfindungsgemäße Freigabeschaltung enthaltenden Kraftfahrzeuginsassen-Schutzsystems erläutert.

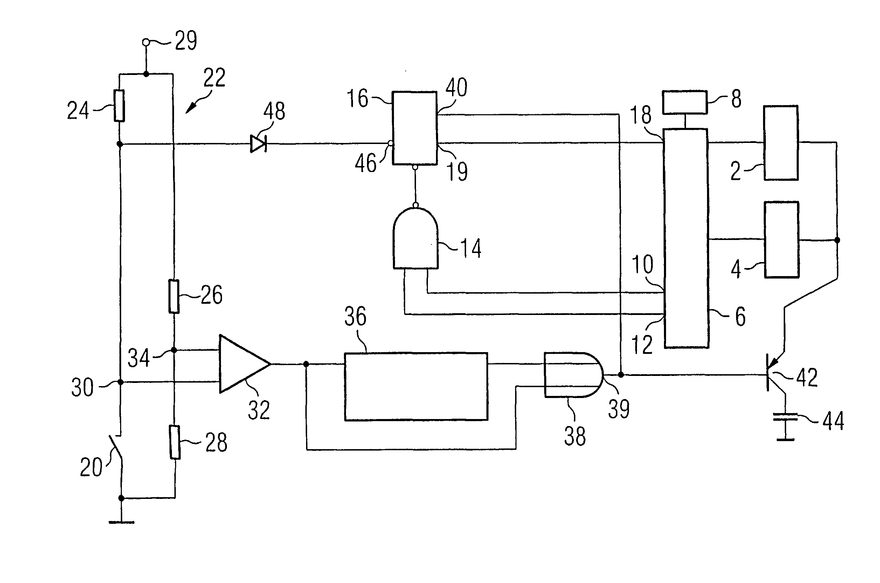

Gemäß der einzigen Figur sind zwei Zündstufen 2 und 4 mit Ausgängen eines elektronischen Steuergerätes 6 verbunden. Die Zündstufen 2, 4 sind nicht dargestellten Gasgeneratoren zugeordnet, die einen Airbag aufblasen. Mit dem Steuergerät 6 ist ein Unfallsensor 8 verbunden, der beispielsweise ein oder mehrere Beschleunigungssensoren enthalten kann. Reset-Ausgänge 10 und 12 sind den Eingängen eines NAND-Gliedes 14 verbunden, dessen Ausgang mit einem Reset-Eingang 15 eines beispielsweise als D-Flip-Flop ausgebildeten logischen Schaltungsbausteins 16 verbunden ist. Ein Signalausgang 18 des Steuergerätes 6 ist mit einem Signaleingang 19 des Schaltungsbausteins 16 verbunden.

Ein Safing-Schalter 20 ist in einer Brückenschaltung 22 mit Widerständen 24, 26 und 28 enthalten, die an einer Spannungsquelle 29 liegt. Ein Abgriff 30 der Brückenschaltung 22 ist mit einem Eingang eines Komparators 32 verbunden, dessen anderer Eingang mit dem anderen Abgriff 34 der Brückenschaltung 22 verbunden ist.

Mit dem Ausgang des Komparators 32 ist ein Zeitglied 36 verbunden, dessen Ausgang mit einem Eingang eines ODER-Gliedes 38 verbunden ist, dessen anderer Eingang parallel zu dem Zeitglied 36 mit dem Ausgang des Komparators 32 verbunden ist. Der Ausgang des ODER-Gliedes 38, der, wie noch erläutert werden wird, einen Safing-Signalausgang 39 bildet, ist mit einem Steuer- bzw. Dateneingang 40 des Schaltungsbausteins 16 und mit dem Steuereingang eines beispielsweise als Transistor ausgebildeten Schalters 42 verbunden. Der Schalter 42 liegt zwischen einem Zündkondensator 44 und den Zündstufen 2 und 4. Ein Ausgang 46 des Schaltungsbausteins 16 ist über eine Diode 48 mit dem Abgriff 30 der Brückenschaltung 22 verbunden.

Aufbau und Funktion der geschilderten Bauelemente sowie die Grundfunktion eines Airbagsystems sind an sich bekannt und werden daher nicht erläutert.

Im Folgenden wird das Zusammenwirken der Schaltungselemente geschildert:

Der Safing-Schalter 20 ist derart ausgebildet, daß er bei einer über einem Schwellwert liegenden Verzögerung schließt, wobei diese Verzögerung unterhalb der Verzögerung liegt, die zu einem Auslösen des Airbags führt. Das Schließen des Safing-Schalters 20 führt dazu, dass sich der Signalpegel an dem einen Eingang des Komparators 32 ändert, wodurch dessen Ausgangspegel beispielsweise auf einen High-Pegel geht und das Zeitglied 36 startet. Die Ablaufzeitdauer des Zeitgliedes beträgt beispielsweise etwa 100 ms, wobei diese Zeitdauer vorteilhafterweise so gewählt ist, daß sie länger ist als die längste Verzögerung, mit der die zweite Zündstufe, beispielsweise die Zündstufe 4, gegenüber der Zündstufe 2 gezündet wird, wenn beide Zündstufen für einen optimalen Schutz eines Fahrzeuginsassen gezündet werden.

Während der Zeitdauer, während der das Zeitglied 36 aktiviert ist, liegt an dem entsprechenden Eingang des ODER-Gliedes 38 ein High-Pegel-Signal. Solange der Safing-Schalter 20 geschlossen ist, liegt auch an dem anderen Eingang des ODER-Gliedes 38 ein High-Pegel-Signal. An dem Safing-Signalausgang 39 liegt somit bei geschlossenem Safing-Schalter 20 (die schließdauer kann u.U. sehr kurz sein) und/oder bei noch laufendem Zeitglied 36 ein Safing-Signal, das den Schalter 42 auf Durchlass schaltet, so dass die von dem Zündkondensator 44 gelieferte Zündspannung an entsprechenden Eingängen der Zündstufen 2 und 4 liegt. Die Zündstufen 2 und 4 sind somit für eine Zündung freigegeben, die erfolgt, wenn das Steuergerät 6 nach Auswertung der Ausgangssignale des Unfallsensors 8 entsprechende Zündsignale erzeugt. Bei offenem Safing-Schalter 20 und abgelaufenem Zeitglied 36 endet das Safing-Signal am Safing-Signalausgang 39 und der schalter 42 öffnet, sodass die Zündstufen 2, 4 normalerweise nicht mehr zündbar sind.

Wenn das Steuergerät 6 die Ausgangsignale des Unfallsensors 8 dahingehend auswertet, dass für den Personenschutz nur die erste Zündstufe 2 gezündet werden muss, erzeugt es an dem Signalausgang 18 ein Taktsignal, das dem Signaleingang 19 des Schaltungsbausteins 16 zugeführt wird. An dem Dateneingang 40 des Schaltungsbausteins 16 liegt das zu diesem Zeitpunkt vorhandene Safing-Signal. Dieser Signalzustand führt dazu, dass am zum Safing-Schalter parallel liegenden Ausgang 46 des Schaltungsbausteins 16 ein Low-Pegel erscheint, der den Abgriff 30 auf den gleichen Pegelzustand bringt wie der geschlossene Safing-Schalter 20, wodurch das Safing-Signal am Ausgang des ODER-Gliedes 38 erhalten bleibt. Der Schalter 42 bleibt somit geschlossen, so dass das Steuergerät 6 die zweite Zündstufe 4 mit ausreichender Verzögerung zünden kann, um die durch das Zünden nur der ersten Zündstufe geschützte Person nicht zu gefährden. Diese Zündung kann erfolgen, obwohl der Safing-Schalter 20 wieder offen ist und das Zeitglied 36 abgelaufen ist.

Das Rücksetzen des Schaltungsbausteins 16 erfolgt über einen Reset-Impuls, den das Steuergerät 6 mit ausreichender Verzögerung nach dem Zünden der ersten Zündstufe an seinem Ausgang 10 erzeugt, oder durch einen allgemeinen System-Reset-Impuls, den das Steuergerät 6 an seinem Ausgang 12 erzeugt. Das NAND-Glied 14 führt diese Impulse dem Reset-Eingang des Schaltungsbausteins 16 zu. Der Schaltungsbaustein 16, der beispielsweise als D-Flip-Flop ausgebildet ist, bildet somit eine Selbsthalteschaltung, die durch Signale an ihren Eingängen 19 und 40 aktiviert wird und ihren Ausgangspegel beibehält, bis ein Reset erfolgt. Die Diode 48 dient dazu, die Brückenschaltung 22 von dem Schaltungsbaustein 16 derart zu entkoppeln, dass nur der Low-Pegel am Ausgang 46 und/oder der durch das Schließen des Safing-Schalters 20 herbeigeführte Low-Pegel wirksam ist.

Mit der geschilderten Freigabeschaltung, die die Zündbarkeit der Zündstufen 2, 4 mittels vom Steuergerät 6 erzeugter Zündimpulse freigibt, wird erreicht, dass eine Verlängerung der Freigabe über die Dauer, während der der Safing-Schalter 20 geschlossen ist, bzw. der durch das Zeitglied 36 vorgegebenen Dauer hinaus nur dann möglich ist, wenn der Safing-Schalter 20 anfänglich geschlossen ist und das Steuergerät 6 feststellt, dass nur eine der beiden Zündstufen gezündet werden darf, um einen Insassen zu schützen. Der Schaltungsbaustein 16 legt seinen Ausgang 46, der parallel zum Safing-Schalter 20 geschaltet ist, dann auf einen Pegel, der dem geschlossenen Safing-Schalter entspricht (beispielsweise auf Masse) so dass am Ausgang des ODER-Gliedes 38 ein dem geschlossenen Safing-Schalter 20 entsprechendes Signal liegt.

Die beschriebene Schaltung kann in vielfältiger Weise abgeändert werden. Den Zündstufen 2 und 4 können getrennte Zündenergiequellen zugeordnet sein, die über eigene Schalter freigegeben werden. Der Komparator 32 ist nicht zwingend erforderlich; ebenso kann das NAND-Glied entfallen, wenn nur ein Reset vorgesehen ist. Der eine Logikschaltung bildende Schaltungsbaustein 16 kann derart aufgebaut sein, dass er ein eigenes Zeitglied enthält, das ihn nach einer vorbestimmten Zeitdauer selbsttätig zurücksetzt.

## Patentansprüche

1. Verfahren zum Freigeben der Zündbarkeit von wenigstens zwei getrennt zündbaren Zündstufen (2;4) in einem Insassenschutzsystem, bei welchem Verfahren ein Safingsignal, mit dem die Zündbarkeit der Zündstufen (2;4) freigegeben wird, verlängert wird, wenn für den Schutz des Insassen bei einem Unfall nur eine Zündstufe gezündet wird.

2. Elektrische Freigabeschaltung für ein Insassenschutzsystem mit wenigstens zwei Zündstufen, enthaltend
einen Safing-Schalter (20),
wenigstens einen Unfallsensor (8) und
ein Steuergerät (6), das in Abhängigkeit von dem Ausgangssignal des Unfallsensors Steuersignale zur Zündung nur einer oder gleichzeitiger oder verzögerter Zündung beider Zündstufen (2, 4) erzeugt, wobei
der Safing-Schalter (20) auf einen physikalischen Parameter anspricht und bei Überschreiten eines Schwellwertes schließt, bei dem ein Insassenschutz mittels des Schutzsystems noch nicht erforderlich ist, und
wobei die Zündstufen (2, 4) derart geschaltet sind, dass sie nur bei Vorliegen eines dem geschlossenen Safing-Schalter entsprechenden Signals an einem Safing-Signalausgang (39) und Vorliegen eines ihnen zugeordneten Zündsignals zündbar sind,
**dadurch gekennzeichnet, dass**
eine mit dem Safing-Signalausgang (39) und dem Steuergerät (6) verbundene Schalteinrichtung (14, 16) vorgesehen ist, die bei geschlossenem Safing-Schalter (20) und bei die Zündung nur einer Zündstufe herbeiführendem Steuergerät (6) an dem Safing-Signalausgang einen dem geschlossenen Safing-Schalter entsprechenden Signalzustand herbeiführt.

3. Schaltung nach Anspruch 2,
**dadurch gekennzeichnet, dass**
die Schalteinrichtung (14, 16) einen Schaltungsbaustein (16) mit einem Steuereingang (40), einem Signaleingang (19) und
einem Ausgang (46) aufweist, wobei der Steuereingang (40) mit dem Safing-Signalausgang (39), der Signaleingang (19) mit dem Steuergerät (6) verbunden sind, der Ausgang (46) parallel zu dem Safing-Schalter (20) liegt und der Ausgang (46) nach Beaufschlagen des Steuereingangs (40) mit einem beim Schließen des Safing-Schalters am Safing-Signalausgang (39) erscheinenden Safing-Signal und Beaufschlagen des Takteingangs (19) mit einem vom Steuergerät (6) bei erforderlicher Zündung nur einer Zündstufe erzeugten Taktsignal einen dem geschlossenen Safing-Schalter entsprechenden Signalzustand annimmt.

4. Schaltung nach Anspruch 3,
**dadurch gekennzeichnet, dass** dem Safing-Schalter (20) ein durch Schließen des Safing-Schalters (20) getriggertes Zeitglied (36) nachgeschaltet ist, dass ein Ausgang des Zeitgliedes mit einem Eingang eines ODER-Gliedes (38) verbunden ist, dessen anderer Eingang mit dem Safing-Schalter (20) verbunden ist und dessen Ausgang den Safing-Signalausgang (39) bildet.

5. Schaltung nach Anspruch 4,
**dadurch gekennzeichnet, dass** der Safing-Schalter (20) in einem Zweig einer Brückenschaltung (22) enthalten ist und dass ein Komparator (32) vorgesehen ist, dessen einer Eingang mit dem Safing-Schalter(20) und dem Ausgang (46) des Schaltungsbausteins (16) verbunden ist, dessen anderer Eingang mit dem anderen Zweig der Brückenschaltung verbunden ist und dessen Ausgang mit dem Eingang des Zeitgliedes (36) und dem einen Eingang des ODER-Gliedes (38) verbunden ist.

6. Schaltung nach einem der Ansprüche 2 bis 5,
**dadurch gekennzeichnet, dass** die Schalteinrichtung (14, 16) einen Reset-Eingang (15) aufweist.

7. Schaltung nach Anspruch 6,
**dadurch gekennzeichnet, dass** der Rücksetzeingang mit dem Ausgang eines NAND-Gliedes (14) verbunden ist, dessen Eingänge mit Rücksetzausgängen (10, 12) des Steuergerätes (6) verbunden sind.

8. Schaltung nach Anspruch 3 und 5,
**dadurch gekennzeichnet, dass** zwischen dem Ausgang des Schaltungsbausteins (16) und der Brückenschaltung (22) eine Diode (48) vorgesehen ist.

9. Schaltung nach Anspruch 3,
**dadurch gekennzeichnet, dass** der Schaltungsbaustein (16) durch ein D-Flip-Flop gebildet ist.

## Claims

1. Method for releasing the firing capability of at least two firing stages (2; 4) which can be fired separately in a vehicle occupant protection system, in which method a safing signal which is used to release the firing capability of the firing stages (2; 4) is prolonged if only one firing stage is fired in order to protect the vehicle occupant when there is an accident.

2. Electric release circuit for a vehicle occupant protection system having at least two firing stages, containing a safing switch (20), at least one accident sensor (8) and a controller (6) which, as a function of the output signal of the accident sensor, generates control signals for firing only one firing stage (2, 4) or both firing stages (2, 4) simultaneously or with a delay, the safing switch (20) responding to a physical parameter and closing when a threshold value at which it is not yet necessary to provide vehicle occupant protection by means of the protection system is exceeded, and the firing stages (2, 4) being connected in such a way that they can be fired only when a signal which corresponds to the closed safing switch is present at a safing signal output (39) and a firing signal which is assigned to them is present, **characterized in that** a switching device (14, 16) which is connected to the safing signal output (39) and to the controller (6) is provided which brings about a signal state corresponding to the closed safing switch when the safing switch (20) is closed and when there is a controller (6) and when a controller (6) which brings about the firing of only one firing stage is present at the safing signal output.

3. Circuit according to Claim 2, **characterized in that** the switching device (14, 16) has a circuit component (16) with a control input (40), a signal input (19) and an output (46), the control input (40) being connected to the safing signal output (39), the signal input (19) being connected to the controller (6), the output (46) being located in parallel with the safing switch (20) and the output (46) assuming a signal stage which corresponds to the closed safing switch after a safing signal which appears at the safing signal output (39) when the safing switch closes is applied to the control input (40) and a clock signal which is generated by the controller (6) when it is necessary to fire only one firing stage is applied to the clock input (19).

4. Circuit according to Claim 3, **characterized in that** a timing element (36) which is triggered by closing the safing switch (20) is connected downstream of the safing switch (20), **in that** an output of the timing element is connected to an input of an OR element (38) whose other input is connected to the safing switch (20) and whose output forms the safing signal output (39).

5. Circuit according to Claim 4, **characterized in that** the safing switch (20) is contained in a branch of a bridge circuit (22), and **in that** a comparator (32) is provided, the one input of which comparator (32) is connected to the safing switch (20) and to the output (46) of the circuit module (16), and the other input of which comparator (32) is connected to the other branch of the bridge circuit, and the output of which circuit module (16) is connected to the input of the timing element (36) and to the one input of the OR element (38).

6. Circuit according to one of Claims 2 to 5, **characterized in that** the switching device (14, 16) has a reset input (15).

7. Circuit according to Claim 6, **characterized in that** the reset input is connected to the output of a NAND element (14) whose inputs are connected to resetting outputs (10, 12) of the controller (6).

8. Circuit according to Claim 3 and 5, **characterized in that** a diode (48) is provided between the output of the circuit module (16) and the bridge circuit (20).

9. Circuit according to Claim 3, **characterized in that** the circuit module (16) is formed by a D-flip-flop.

## Revendications

1. Procédé pour libérer la possibilité d'allumage d'au moins deux étages d'allumage (2 ; 4) pouvant être allumés séparément dans un système de protection d'occupants, procédé dans lequel un signal de sécurité avec lequel la possibilité d'allumage des étage d'allumage (2 ; 4) est libérée est prolongé lorsque, pour la protection des occupants en cas d'accident un seul étage d'allumage est allumé.

2. Circuit pour libérer électriquement un système de protection d'occupants comprenant au moins deux étages d'allumage, qui comprend
un interrupteur de sécurité (20),
au moins un détecteur d'accident (8) et
un appareil de commande (6) qui, en fonction du signal de sortie du détecteur d'accident, produit des signaux de commande pour l'allumage d'un seul des deux étages d'allumage (2, 4) ou pour l'allumage simultané ou retardé des deux étages d'allumage, dans lequel
l'interrupteur de sécurité (20) répond à un paramètre physique et se ferme en cas de dépassement d'un seuil auquel une protection des occupants au moyen du système de protection n'est pas encore nécessaire, et
dans lequel les étages d'allumage (2, 4) sont connectés en circuit de manière qu'ils ne puissent être allumés qu'en présence d'un signal correspondant à l'état fermé de l'interrupteur de sécurité à une sortie de signal de sécurité (39) et qu'en présence d'un signal d'allumage qui leur est associé,
**caractérisé en ce qu'**
il est prévu un dispositif de circuit (14, 16) relié à la sortie de signal de sécurité (39) et à l'appareil de commande (6) et qui, lorsque l'interrupteur de sécurité (20) est fermé et que l'appareil de commande (6) provoque l'allumage d'un seul étage d'allumage, produit à la sortie de signal de sécurité un état de signal qui correspond à l'état fermé de l'interrupteur de sécurité.

3. Circuit selon la revendication 2,
**caractérisé en ce que**
le dispositif de circuit (14, 16) présente un composant de circuit (16) possédant une entrée de commande (40), une entrée de signal (19) et une sortie (46), où l'entrée de commande (40) est reliée à la sortie de signal de sécurité (29) et l'entrée de signal (19) à l'appareil de commande (6), où la sortie (46) est en parallèle avec l'interrupteur de sécurité (20) et où, après l'excitation de l'entrée de commande (40) avec un signal de sécurité qui apparaît à la sortie de signal de sécurité (39) lors de la fermeture de l'interrupteur de sécurité, et après excitation de l'entrée d'impulsion (19) avec un signal d'impulsion produit par l'appareil de commande (6) lorsqu'il n'est nécessaire d'allumer qu'un seul étage d'allumage, la sortie (46) prend un état de signal qui correspond à l'état fermé de l'interrupteur de sécurité.

4. Circuit selon la revendication 1,
**caractérisé en ce qu'**en aval de l'interrupteur de sécurité (20), est connecté un élément de temporisation (36) déclenché par la fermeture de l'interrupteur de sécurité (20), **en ce qu'**une sortie de l'élément de temporisation est reliée à une entrée d'un élément OU (38) dont l'autre entrée est reliée à l'interrupteur de sécurité (20) et dont la sortie forme la sortie de signal de sécurité (39).

5. Circuit selon la revendication 4,
**caractérisé en ce que** l'interrupteur de sécurité (20) est contenu dans une branche d'un circuit en pont (22) et **en ce qu'**il est prévu un comparateur (32) dont l'une des entrées est reliée à l'interrupteur de sécurité (20) et à la sortie (46) du composant de circuit (16) dont l'autre entrée est reliée à l'autre branche du circuit en pont, et dont la sortie est reliée à l'entrée de l'élément de temporisation (36) et à l'une des entrées de l'élément OU (38).

6. Circuit selon une des revendications 2 à 5,
**caractérisé en ce que** le dispositif de circuit (14, 16) présente une entrée de remise à zéro (15).

7. Circuit selon la revendication 6,
**caractérisé en ce que** l'entrée de remise à zéro est reliée à la sortie d'un élément NON ET (14) dont les entrées sont reliées aux sorties de remise à zéro (10, 12) de l'appareil de commande (6).

8. Circuit selon les revendications 3 et 5,
**caractérisé en ce qu'**une diode (48) est prévue entre la sortie du composant de circuit (16) et le circuit en pont (22).

9. Circuit selon la revendication 3,
**caractérisé en ce que** le composant de circuit (16) est formé d'une bascule D.
